(19) **Europäisches Patentamt European Patent Office Office européen des brevets**

(11) **EP 1 017 244 B1**

(12) **EUROPEAN PATENT SPECIFICATION**

(45) Date of publication and mention of the grant of the patent:
**11.02.2009 Bulletin 2009/07**

(51) Int Cl.:
***H04Q 11/04*** *(2006.01)*

(21) Application number: **98830788.0**

(22) Date of filing: **28.12.1998**

(54) **Method and system to assign transmission bandwidth in both radio and pon ATM P-MP systems**

Verfahren und Vorrichrung zur Bandbreitezuordnung in sowohl einem funk als auch einem PON-ATM P-MP System

Méthode et système pour l'allocation de bande valable soit dans un système P-MP ATM radio et soit dans un système P-MP ATM PON

(84) Designated Contracting States:
**AT BE CH CY DE DK ES FI FR GB GR IE IT LI LU MC NL PT SE**
Designated Extension States:
**AL LT LV MK RO SI**

(43) Date of publication of application:
**05.07.2000 Bulletin 2000/27**

(73) Proprietors:
• **Italtel S.p.a.**
  **20154 Milano (IT)**
• **Siemens S.p.A.**
  **20126 Milano (IT)**

(72) Inventors:
• **Profumo, Alberto**
  **20147 Milano (IT)**
• **Santacesaria Claudio**
  **20139 Milano (IT)**
• **Baldo Paolo**
  **28065 Cerano (NO) (IT)**

• **Lovino Luigi**
  **20134 Milano (IT)**

(74) Representative: **Maier, Daniel Oliver et al**
  **Siemens AG**
  **CT IP Com E**
  **Postfach 22 16 34**
  **80506 München (DE)**

(56) References cited:
**EP-A- 0 804 006          WO-A-97/35410**
**US-A- 5 684 791**

• **WINSTANLEY S B ET AL: "Permit delivery rates of an ATM cell based access network MAC protocol" IEE ELEVENTH UK TELETRAFFIC SYMPOSIUM. PERFORMANCE ENGINEERING IN TELECOMMUNICATIONS NETWORKS, IEE ELEVENTH UK TELETRAFFIC SYMPOSIUM. PERFORMANCE ENGINEERING IN TELECOMMUNICATION NETWORKS, CAMBRIDGE, UK, 23-25 MARCH 1994, pages 8A/ 1-9, XP002104951 1994, London, UK, IEE, UK**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND AND FIELD OF THE INVENTION

The invention relates to the definition and the exploitation path of a Medium Access Control (MAC) protocol to be applied in wideband point-to-multipoint transmission systems, that rely on optical physical layer (Passive Optical Network) or radio physical layer and operate according to the time division multiple access schema and ATM transport format.

Among access techniques in telecommunication networks, point-to-multipoint on radio or physical channel are having a great market success due to their indubitable advantages in terms of flexibility and costs compared to point to point solutions.

As well known by skilled in the art, this kind of systems is characterised by the presence of a Master Station (MS) and a certain number of Peripheral Stations (PS): downstream channel (from MS to PS) is broadcast while upstream channel (from PS to MS) is used with time division multiple access (TDMA) under MS control.

To properly realise transmission from many PS to the single MS on a single channel, a point-to-multipoint system needs a solution to allow effective sharing of the single communication channel and to avoid that each PS transmission could interfere with others'.

The solution for physical mean sharing is generally based on time division multiple access, that is the single communication channel used for transmission from PSs to MS is divided into time slots defined on the basis of timing diffused on the broadcast downstream channel.

Each time slot is reserved to transmission from a single PS that is activated in that particular slot by a message, called 'grant', sent by the MS on the downstream channel.

MAC functionality, located in the MS, is in charge of generating these 'grant' messages in order to satisfy bandwidth requirements of PSs.

In an ATM system, moreover, MAC functionality has to be able to guarantee that bandwidth assigned to each PS allows to fulfil quality of service parameters of each connection belonging to different classes of traffic defined in the international specifications.

In specialised literature and patent specifications various TDMA solutions have been proposed; they can be divided into two categories:

- Extremely specialised ones, based on physical channel properties and little reusable even in different versions of the same equipment; these solutions are often enough simple, still being very sensitive to round trip delay, channel capacity and error probability.
- Flexible solutions, very complex in hardware but with indubitable advantages of total adaptivity.

We can quote some of the most interesting experiences about these techniques.

In the CEE financed project "RACE 2004 Broadband Access Facilities" an experimental system to access a passive optical network has been implemented. In this system the MS (optical line termination) manages upstream channel by the generation of 'grants' dedicated to single users connected to peripheral stations. Complexity was high due to the exchange and treatment of queue status and the system was not able to optimise transportation of ATM connections carrying narrowband services like, for example, telephone calls.

A different approach, taking into account narrowband services, was based on a MAC protocol that allowed allocation of the bandwidth to services on a semi-permanent basis, but unfortunately treated in the same manner also variable traffic or wideband connections, like, for example, Internet access connections.

Technique described in the Italian patent N° 01286424, titled "Metodo di gestione dell'accesso ad una rete ottica passiva (PON) in un sistema PON di tipo TDMA", introduced major improvements in comparison with previous techniques allowing narrowband and broadband traffic treatment and, as far as broadband traffic is concerned, giving the possibility to allocate bandwidth in dynamic fashion.

These results have been achieved with some new concepts:

- Use of 'grants' addressing PS and not the user flux with the advantage of letting the PS choosing which user (connection) to serve each time that a grant is received.
- Narrowband and constant bandwidth broadband traffic treatment via a semi-permanent table.
- Variable bandwidth broadband traffic without maximum delay requirements is treated with an algorithm that takes into account the fullness level of queues in the PS to decide PS priority for 'grant' assignment.

The international patent application WO 97/35410 A discloses a method for allocating bandwidth in a layered data communication network in which a plurality of subscriber units communicate with a central controller, comprising the steps of:

- maintaining a running total of unallocated bandwidth in successive control intervals;
- determining a traffic count of each of said subscriber units;
- adjusting an assigned bandwidth of said subscriber units according to said traffic count; and
- modifying said running total of unallocated bandwidth according to the adjustment in the assigned bandwidth.

The cited invention is particularly applicable to the transmission of ATM-based upstream messages in a hybrid fibre coaxial network, allowing subscriber units to communicate messages to a central controller, e.g. for internet access, videoconferencing, audio communication or the like. An important feature of the cited method is that the subscriber units do not need to send a signal to the central controller to request bandwidth or report the subscriber unit buffer size. Accordingly, the Dynamic Bandwidth Allocation (DBA) scheme is essentially transparent to the subscriber units, so that conventional subscriber units may be employed, but some limitations affect the DBA scheme because of said transparency.

## SCOPE AND SUMMARY OF THE INVENTION

Object of present invention is a MAC protocol and related realisation modalities, capable of not only serve in adequate manner connections related to narrowband and broadband services with required efficiency, but also to satisfy some traffic parameters of broadband services, differentiating thus, within broadband services, treatment of connections belonging to different traffic classes, but guaranteeing in the meantime efficient use of all available transmission capacity or bandwidth in the channel from PSs to MS.

According to present invention, transmission bandwidth from PSs to MS is assigned by the MS to the PS, following two different modalities.

- static allocation (known technique)
- dynamic allocation.

An important aspect of present invention is represented by the fact that dynamic allocation is made according to two different mechanisms:

- one mechanism for dynamic guaranteed bandwidth allocation guarantee that PS has always the possibility to be assigned, for certain connections, a certain amount of "minimum guaranteed bandwidth" defined during connection setup phase but allows PS to momentarily free a part of or all this "minimum guaranteed bandwidth", according to two different and concurrent mechanisms that can be separately used and are described below;
- a dynamic mechanism to partition bandwidth that remains available distributes this "available bandwidth" in equal parts among all PSs that have traffic to be transmitted, thus implementing a fairness model perfectly attending criteria specified by standardisation bodies.

As to previously described mechanism of guaranteed dynamical bandwidth allocation, PS can modulate assigned bandwidth according to two modalities: first modality which is on/off, is based on the sending by the PS of an aggregated information about queue status related to those queue which rely on the dynamical bandwidth allocation; this information, indicating whether traffic to be transmitted is present or not can be used by the centralised unit to momentarily inhibit bandwidth assignment to PS that doesn't have traffic waiting to be transmitted in connections with dynamical bandwidth allocation.

Second modality is, instead, based on the sending by the PS of a more detailed information about real bandwidth requirements for guaranteed bandwidth connections and allows centralised unit, on the basis of received information, to change instantaneous bandwidth assignment to that PS on the basis of instantaneous requirements, in order to guarantee efficient statistical multiplexing.

The present invention reaches therefore the target of over-performing known algorithms for bandwidth allocation in terms of efficiency, implementing a simple, robust and flexible MAC protocol for P-MP systems, capable of using in the best way the overhead to exchange information between PSs and MS, but capable in the meantime of guaranteeing support for different ATM classes of traffic, in conformance with existent rules.

The invention defines a MAC protocol suitable for P-MP radio or PON systems, operating on a single communication channel for each transmission direction and based on ATM transport format and TDMA multiple access technique on the channel from PS to MS.

Protocol is able to treat in an optimal fashion bandwidth allocation for ATM classes like CBR and UBR and, through a totally new mechanism, even for different variable bandwidth traffic types with guaranteed minimum (like UBR+, VBR non real time, ABR, GFR, etc.).

MAC protocol proposed in the present invention offer instruments that allow MS to assign to each PS a bandwidth which is evaluated on a instant by instant basis on the basis of state information received by PSs, always guaranteeing respect of traffic parameters and, in particular, of minimum guaranteed bandwidth, defined in the connection setup phase and MS can eventually modulate assigned bandwidth on the basis of state information received by PSs.

According to method proposed in the invention, ATM layer is left the responsibility to guarantee other service parameters, like cell loss probability and delay constraints (that are not treated by the new MAC protocol).

The invention is clearly defined in independent claims 1 and 13. Additional useful characteristics of present invention which are believed to be novel are set forth with particularity in the appended claims.

## BRIEF DESCRIPTION OF THE DRAWINGS

The invention, together with further objects and advantages thereof, may be understood with reference to the following description, taken in conjuction with the accompanying drawings, and in which:

  **Figure 1** is a reference scheme of a P-MP system, in the case of radio physical layer;

**Figure 2** is a scheme that illustrates interfaces of MAC protocol processor in the MS;

**Figure 3** is a scheme illustrating generic mechanism of grant generation to be used in the MAC protocol processor in the MS;

**Figure 4** is a scheme that shows MAC protocol processor interfaces in the PS;

**Figure 5** is a schematic picture of the selective retransmission scheme without traffic distortion;

**Figure 6** is a scheme of grant generation mechanism with retransmission included for MS MAC Master Processor.

DESCRIPTION OF SOME EMBODIMENTS OF THE INVENTION

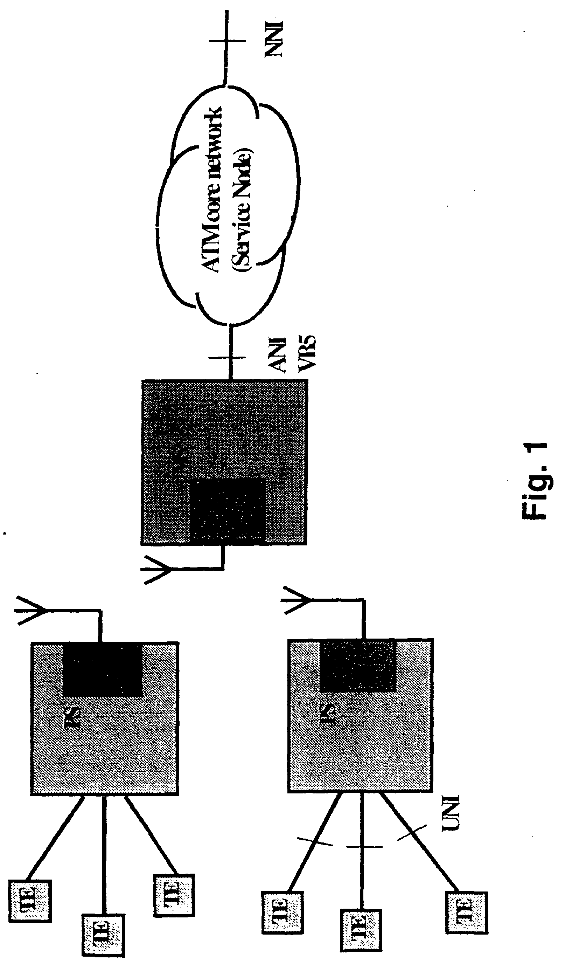

Reference scheme is shown in Figure 1.

Used acronyms are the following:

PS: Peripheral station
MS: Master Station

Relevant entities are defined in the following way:

**MAC Master Processor**

Localised in the MS, it elaborates information received by PSs and generates messages (grant) to assign upstream transmission in each slot of the TDMA frame to selected PS.

**MAC Slave processor**

Localised in the PS, it provides correct transmission commands, choice of traffic to be transmitted in each slot on the basis of MAC information received and information or messages to be sent to MS.

**MAC Protocol**

MAC protocol uses messages that are sent in both directions to co-ordinate various functional entities (MS and PS): these messages and their interpretation are called MAC protocol. MAC protocol of current invention, belongs to category of protocols without collision, with centralised controller (MAC Master Processor) that is the only entity which can enable transmission of one or another PS.

Centralised control allows, in fact, avoiding that, after independent decisions, collisions take place that is more than one PS transmit at the same time with the consequence of lost information.

Main requirements of the system hereby described in terms of functionality and protocol as best defined in the following are:

1) flexibility of bandwidth allocation where flexibility is intended as:

- capability of varying, as a consequence of commands released by maintenance or control system, bandwidth allocation among various PS, without degrading already active traffic: it can be defined as capacity of bandwidth relocation.

- capability to dynamically assign, on the basis of information received by MS about various PS's queue status, each slot to one or another PS: this capability is usually called dynamic bandwidth allocation.

2) capability to support in proper way (QoS respect) various classes of traffic: CBR, UBR, VBR rt, VBR nrt, ABR, UBR+, GFR.

3) capability to operate independently of total channel capacity (from a minimum of 10 Mb/s to a maximum of 150 Mb/s).

4) capability to operate in every condition of distance between MS and PS up to a maximum distance of 20 km.

Bandwidth allocation, that is proper assignment of slot to each PS, can be done in a static way, which is independent of queue status in the PSs, or in a dynamic way which depends on the queue status in the PSs.

To satisfy QoS (Quality of Service) requirements of CBR traffic, static assignment is used; for other types of traffic dynamic assignment is preferred.

MAC functionality must, thus, be able to operate, even simultaneously, in both ways.

In the following, MAC messages, an essential part of the protocol are defined.

In Ms → UP (downstream) direction the MAC Master Processor must send messages to indicate assignment of each upstream transmission slot. The message that carries assignment information is called *Grant.*

The number of these messages, in a certain time interval, must be equal to the number of upstream slots in the same interval. Duration of such interval depends on transport modality of the messages.

**Grant** carry the following information fields:

Type of slot to be transmitted by the PS (user traffic, operation and maintenance, minislot block);
Identification number of the PS (or the PSs) to which slot is assigned (Connection ID or type of traffic is NOT carried).

If messages are grouped and sent in blocks of K, each block of K messages is transmitted before a period in which K upstream slots will be transmitted.

Precise choice of modality to carry Grants in downstream frame is not essential to protocol functionality.

Grant is protected with an error correcting code, because a grant which isn't received or is erroneously receive can cause collisions or wasted slots with the effects of bandwidth waste and potentially an excessive Cell Delay Variation (CDV) fro CBR traffic.

In the upstream direction, each PS sends to the MS indications about (instantaneous) queue status and instantaneous bandwidth need for dynamic bandwidth allocation. This message is called "Request".

Information fields are:

1) Aggregated queue status: the field carries information about queue status in the PS without distinguishing among connections but cumulating information of all ATM connections that use dynamic bandwidth allocation in the PS. Static allocation connections are excluded. This status can be expressed by 1 or more bits.

2) **Requested dynamic bandwidth,** always less than minimum guaranteed bandwidth defined during connection setup phase, expressed as instantaneous required minimum cell rate or **Minimum requested bandwidth** of the PS. This second information is optional and is computed by the PS on the basis of internal status (number of active connections of minimum guaranteed bandwidth type and related instantaneous traffic).

This information reaches MAC Master Processor with a certain minimum periodicity, determined by a proper programming of MAC Master Processor, as to guarantee fulfilment of all traffic parameters of active connections.

Request transport can take place with two different and coexistent modalities:

1) piggy-back in traffic slot - in the upstream slot transmission, the PS to which the slot is assigned, transmits a Request as well as user traffic;

2) mini-slot - in special upstream slot assigned through particular grants, one or more PSs transmit only a Request (plus physical layer preamble), usually using only a part of the entire slot, called mini-slot, for each transmission.

As already stated, MS hosts the MAC Master Processor, the block that implements MAC functionalities.

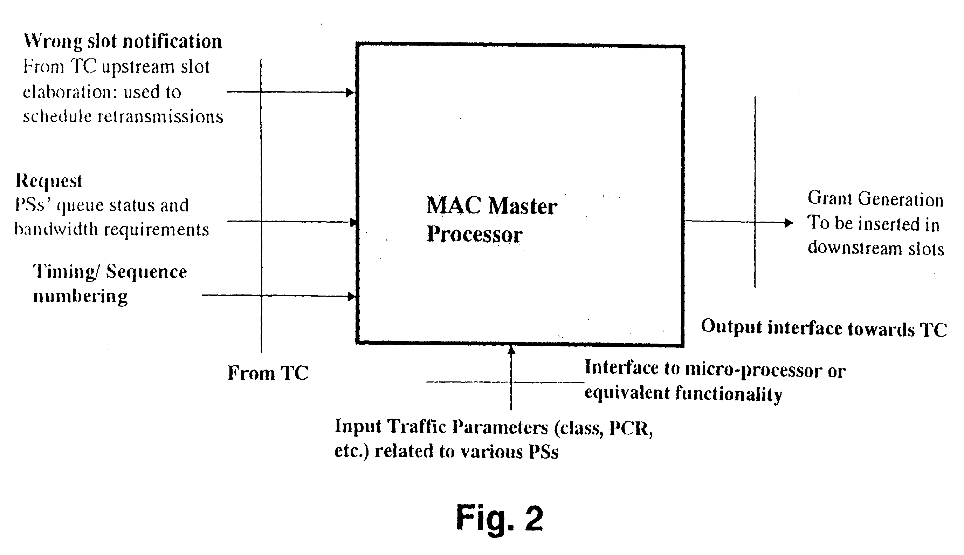

In Figure 2 functional interfaces of the MAC Master Processor block are shown.

From control/configuration interface traffic descriptors related to the combination of all the connections belonging to each traffic class of each PS are received.

From interface towards Transmission Convergence (TC) layer the following information is transferred:

- timing information and frame numbering (useful to generate retransmission grants)

- PSs' queue status information received through mini-slot or special field inside each upstream transmission burst.

- wrong burst reception notification: used in case of retransmission functionality is implemented.

MAC processor, using these inputs and performing MAC algorithm that is described forward, generates a Grant Stream made of a Grant for each upstream slot.

These Grants are transferred to TC block or functionality in order to be inserted in the proper position in downstream frame.

Insertion modality (grouped or one by one, error correcting or detecting code etc.) is not relevant to scope and functionality of the system in the present invention.

Bandwidth allocation is therefore performed by the MAC Master Processor in the MS, through proper Grant generation in order to guarantee:

- static bandwidth assignment (meaning by static that it can be modified by command sent to MAC Master Processor, but non according to PS queue status) of a certain amount of bandwidth to each PS.

- dynamic assignment of bandwidth not assigned statically to priority connections. This allocation scheme can be influenced by PS queue status.

- ex-equo assignment of bandwidth not assigned with previous mechanism to all the PSs that have traffic in the queue.

Static allocation corresponds to the assignment of a fixed capacity, equal to a constant grant rate, to a certain PS, that is to a certain group of ATM connections with constant traffic profile in input to that PS.

Configuration information for static bandwidth allocation transits through proper maintenance and control interfaces and reaches MAC Master Processor control interface in the MS.

MAC Master Processor is not influenced by the status of the queue related to static allocation connections: for these connections no Request information carrying queue status is transmitted.

PS is informed about this static assignment in order to:

- identify ATM connections to insert in highest priority static queue.

- control user traffic through a correct policing functionality.

This information can reach PS through a dedicated operation and maintenance channel identified by a special VPI/VCI couple.

At the end of connection setup procedure, MAC Master processor starts generation of Grants related to those static connections.

Static allocation is usually applied to CBR traffic, but it can be used also for VBR real-time and, in principle, it can be applied to UBR traffic with clear inefficiencies.

Static modality must guarantee a continuous Grant generation stream, correspondent to a certain predetermined capacity to each requesting PS.

Each Master Processor is thus capable to generate up to M Grant streams in static modality, where M is the total number of PSs served by the same MAC Master Processor.

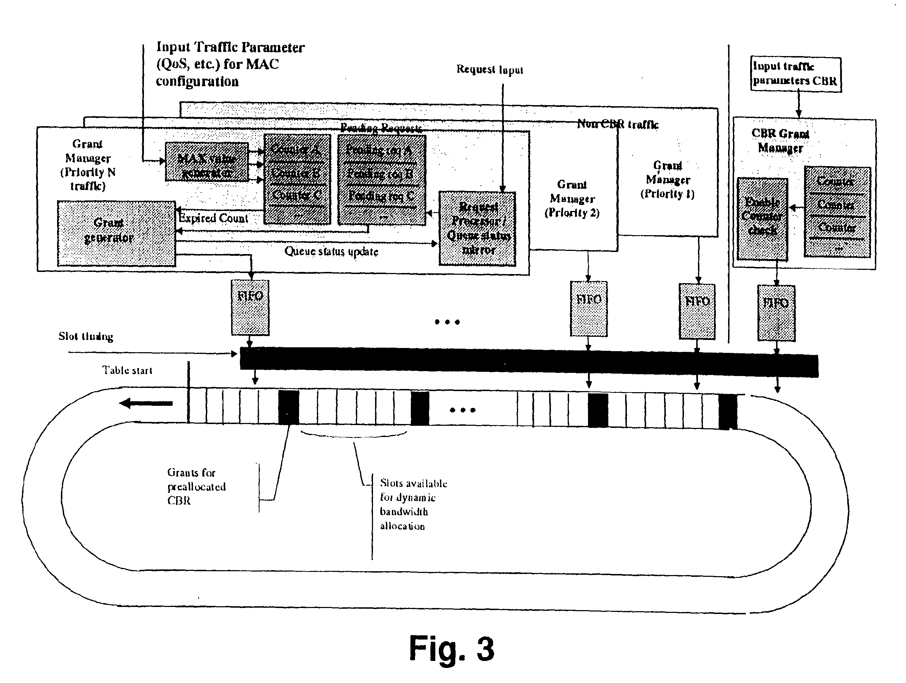

Grants needed to statically assign a certain constant capacity to a certain PS are inserted in a table in proper positions; the table is shown as a circular stripe in Figure 3 to indicate that the table is cyclically scanned.

The position inside the table is decided by an algorithm whose task is to resolve conflicts if more than one PS have contemporary right to a certain slot assignment; the algorithm assigns subsequent and adjacent slot to the various PSs thus introducing a Cell Delay Variation which is acceptable because equivalent to that introduced by an ATM multiplexer.

Grants extracted from the table during cyclical scanning are transferred to the TC interface to be transmitted to the PSs.

Table dimension must be such as to obtain granularity and minimum allocation as requested by system specification.

Each position in the table corresponds to a slot and can contain:

- a statical allocation user traffic Grant for a particular PS
- an Operation and Maintenance Grant for a particular PS
- a Grant for a group of minislots thus addressed to a group of PSs
- an available grant for dynamic allocation (free position)

Dynamic allocation is mainly used for traffic with variable traffic profile.

In Figure 3 MAC Master Processor functional scheme that implements static/dynamic Grant generation is shown according to present invention.

Functional blocks in Figure 3 are:

A *Priority Scheduler,* that selects the right FIFO from which Grant must be extracted in each slot choosing on the basis of FIFO status and priority. Static traffic is the highest priority.

As many *Grant Managers* as the number of handled priorities.

Slots that aren't assigned statically are dynamically assigned to other traffic types. In the Figure three priorities are shown.

Grant Manager function is repeated for each priority; only one priority will be therefore described in the following.

*Request Processor & Queue Status Mirror* elaborates Requests sent by PSs for that traffic priority, rebuilding in dedicated registers the mirrored queue status related to each PS.

When the mirrored status indicates the queue of a PS is not empty, a 'Pending request' information related to that PS is active inside the MAC Master Processor.

'Pending request' can't be served until a downcounter associated to that priority of that PS has expired.

This constraint realises an automatic flux control on the upstream traffic in the system.

The starting value of the down-counter is such as to generate a grant rate equal to the sum of all the guaranteed rates of all the connections in the PS.

At the beginning the starting value of the counters is chosen at connection setup.

During normal operation, with a frequency determined by the MAC Master Processor, the PS, according to its instantaneous state sends a precise request of **"Minimum requested bandwidth",** which is the new starting value for the correspondent counter in the MAC Master Processor; upon reception of the new Request, MS modifies counter starting value with the new requested value (MS must check that requested value is greater than the value identified during connection setup, that means that PS can only release part of the "Minimum Bandwidth" assigned at the beginning during connection setup phase and not increase that bandwidth); if current counter value is greater than new starting value, current value is set equal to new starting point.

All counters in MS are decremented at each upstream slot time. When a counter after downcounting from starting point to zero, expires, it is re-set to starting point and a binary information called 'Expired Counter' associated to related PS is set to 1.

Activation of both 'Expired Counter' and 'Pending Request' at the same time for a particular PS corresponds to the activation of a 'Pending Grant' information associated to that PS.

Another process scans all the Pending Grants at each slot time and inserts in the Grant FIFO a Grant of user traffic type with the identification number of the related PS for each PS that has an active Pending Grant. At the same time the process sets to 0 the 'Expired Counter' information.

Grants are extracted from the FIFO one for each slot that is not reserved to higher priority traffics.

If the counter expires when 'Pending Request' is not active, the counter is re-set to starting value and then it resumes counting, while 'Expired Counter' is set and stays at 1, so that eventual later activation of Pending Request will immediately cause Pending Grant activation.

Counter structure can be used to realise more sophisticated flux control functions, simply varying according to more or less complicated algorithms modality of increment and decrement of the counter itself.

Bandwidth not assigned according to previously described mechanisms (that is when, on Grant generation time, no Pending Grant is active and no static assignment is preallocated) is distributed in equal shares to all the PSs that have at least one cell in queue in any connection which is handled by the dynamic modality (statically handled connections are therefore excluded) and therefore related Grants are assigned cyclically to all the PSs that have an active 'Pending Request'.

If no PS has cells to be transmitted, bandwidth is used to allow sending of additional "minislots", that is the Grant is assigned to a slot period to be used to send minislots when no Pending Request, no Pending Grant and no static allocation Grant are present at a certain slot time.

Minislot grants are assigned cyclically to all the PSs in the system.

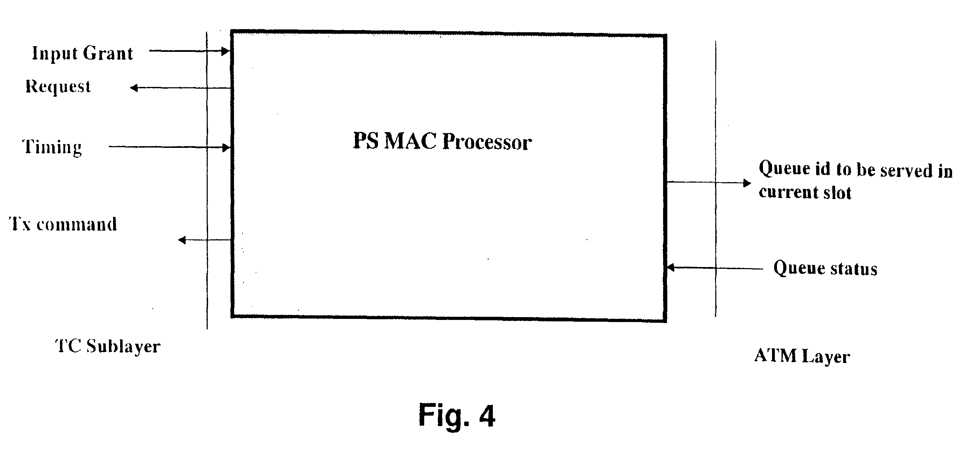

In Figure 4 PS MAC Processor interfaces towards other UP functionalities are shown.

Through interface to Transmission Convergence (TC), the functionality that provides insertion of MAC messages and user data in the packet or frame to be transmitted on the physical channel and extraction of the same information in the reception side, MAC Slave Processor receives the following information:

- timing of transmission slots
- Grants

Through interface toward ATM functionalities MAC Slave Processor receives the following information:

- queue status information

MAC Slave Processor produces as an output towards TC:

- transmission activation commands in determined upstream slots or minislots
- indication of the type of information to be served in correspondence of each activation command (user traffic, maintenance or mini-slot): user traffic queues associated to different classes of traffic or different connections are assumed to be part of ATM layer which is also responsible for the choice of the queue to be served at each transmission activation command.
- Request messages to be inserted in upstream slots and mini-slots with the correct timing when proper activation commands are activated.

Retransmission functionality can be useful in some conditions and therefore can be optionally added to the MAC system of the invention.

As an example, it is here described a retransmission technique that can be optionally applied to only upstream traffic (the most sensitive to physical channel problems) in the system of the invention.

Considered retransmission technique will handle all the classes of traffic in the same manner.

As well as MAC messages and their contents, that have been previously described, special messages can be defined to implement retransmission: a "retransmission grant" will be added to grant types as well as user traffic, mini-slot and operation and maintenance traffic grant type.

A new downstream message is defined and named "reception acknowledge"; it is inserted in a dedicated field of each downstream slot and carries information on right or wrong reception of the upstream burst that has been transmitted in the upstream slot that immediately precedes the downstream slot in which the acknowledge is inserted.

Acknowledge implicitly carries information on the position of the wrong slot.

Support of retransmission functionality mustn't degrade unacceptably performance of normal traffic and therefore when a cell loss occurs, it must be avoided that:

- normal traffic is delayed until retransmission of lost traffic has taken place
- cell sequence integrity is lost in the MS.

To comply with these requirements, a reordering buffer is included in the MS; the buffer is made of M locations each capable of storing an entire cell.

Buffer is traversed by all the cells receive by MS TC, before they are transferred to other (usually ATM) functionality in the MS. In this manner a constant delay of M cells is introduced on all the upstream connections.

M is chosen so that:

- up to K consequent cells can be retransmitted (lower bound);
- an unacceptable delay isn't introduced and a too large memory isn't required (upper bound).

When up to K consequent cells are lost, K free positions are left in the reordering buffer; these positions will shift of a place at each slot time towards the end of the buffer.

When a retransmitted cell is received, it is directly inserted in the empty position, passing over all the positions nearer to buffer input.

K consequent cells retransmission doesn't necessarily take place in a single burst of the same length: the single burst would inevitably cause a potentially unacceptable distortion of other traffics (CBR in particular).

It is therefore advisable that K retransmission grants are generated with proper spacing: a grant scheduler handled with maximum priority will be therefore associated to retransmission traffic.

In this way a spacing of J slots between any two retransmission grants will cause the retransmission of K cells to take place in K*J slots.

Reordering buffer shall be dimensioned in $M_{max}$ cell positions in order to allow reconstruction when up to K consequent cells are lost where:

$$M_{max} = K*(J-1) + T_{Round\ Trip\ Max}/T_{Slot}$$

without considering elaboration times.

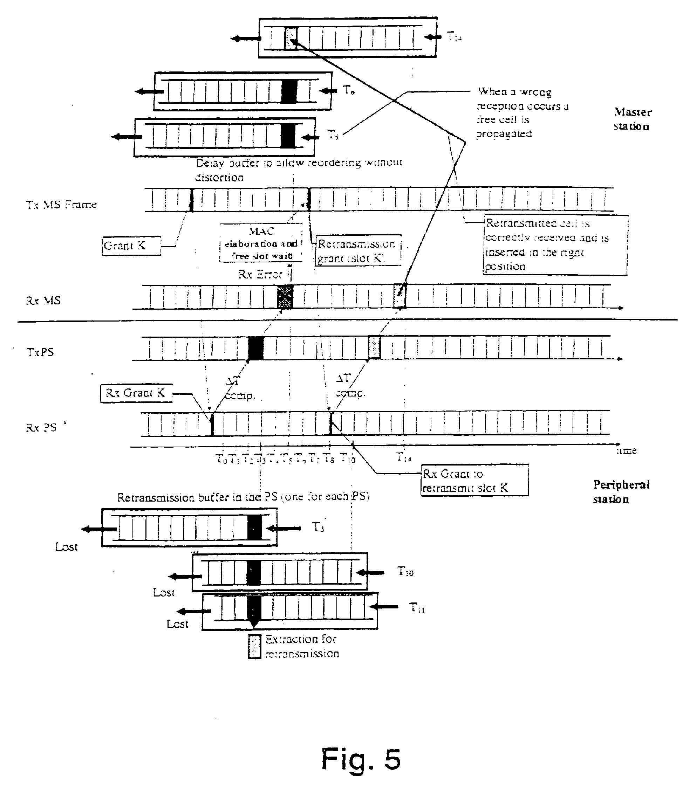

The functional behaviour is traced in Figure 5.

When more than K consequent cells are lost, all the cells after the $K^{th}$ cannot be retransmitted (cannot be received in time for reordering).

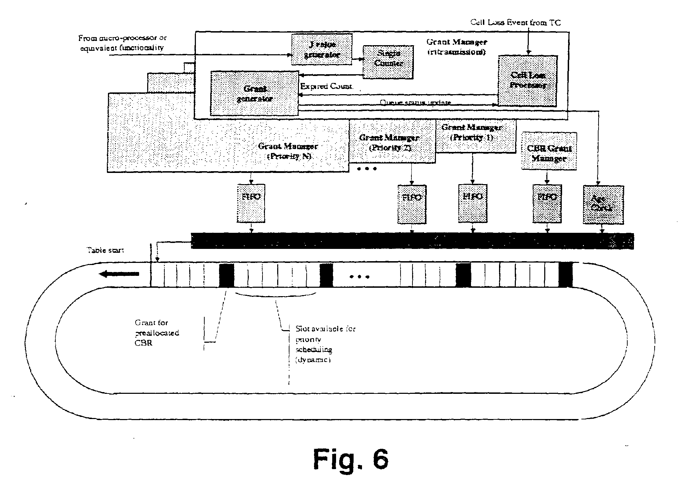

As MS is able to verify age and thus usefulness of retransmission grants, it's advisable to insert a check through a dedicated block (Age check block in Figure 6) so that in case of excessive age grant won't be transmitted to the PS.

PS must have a FIFO buffer of the same dimension, in which transmitted cells are stored and shifted at each upstream slot time (if the slot is assigned to a different PS an idle cell is inserted). When a retransmission is requested the PS gets the requested cell from the buffer and sends it over.

## Claims

1. Method to assign bandwidth in a point-to-multipoint ATM transmission system having a centralized or Master Station (MS) and a plurality of Peripheral Stations (PSs),
including the steps of
allocating, by the Master Station (MS), a certain portion of total bandwidth in static modality to various Peripheral Stations (PSs) on the basis of information about active connections but without considering the status of the queues in the various Peripheral Stations (PSs),
**characterised by** distributing, by the Master Station (MS), bandwidth not assigned with the static technique according to a dynamic bandwidth allocation mode having two modalities, namely a guaranteed dynamical bandwidth modality and an available dynamic bandwidth modality,

- according to the guaranteed dynamical bandwidth modality receiving bandwidth request messages sent by Peripheral Stations (PSs) including instantaneous bandwidth requirement information, and allocating bandwidth according to the received requests,
- according to the available dynamic bandwidth modality assigning bandwidth which is not assigned by the previous techniques by sharing it in equal parts among Peripheral Stations (PSs) signalling to the Master Station (MS) the need to use the channel from the Peripheral Stations (PSs) to the Master Stations (MS) to send traffic.

2. Method of claim 1, **characterised by** the fact that the request sent by a Peripheral Station (PS) contains a binary information, in particular empty/not empty, or a multi-bit information, in particular a level of fillment, identifying queue status in the Peripheral Station (PS) for those queues that are handled by the dynamic bandwidth allocation mode; said request containing, as well or instead, an information representing instantaneous rate of Grants generation for guaranteed dynamic bandwidth, rate that is limited by a maximum value that depends on active connections and is known both in the Master Station (MS) and in the Peripheral Station (PS).

3. Method of claim 2, where such instantaneous rate is estimated on the basis of incoming rate of ATM cells in the Peripheral Station (PS).

4. Method of claim 2, where such instantaneous rate is estimated on the basis of Peripheral Station (PS) queue fillment level.

5. Method of claim 1, where said allocation of bandwidth allows transmission of one particular Peripheral Station (PS) in one particular time slot on the channel from Peripheral Stations (PSs) to Master Station (MS), so that the Peripheral Station (PS) can send a user traffic cell with associated Request or a Request only or an operation and maintenance cell.

6. Method of claim 5 where said allocation of bandwidth address the Peripheral Stations (PSs) without any distinction related to the type of bandwidth allocation with which they have been generated in the Master Station (MS) and the Peripheral Station (PS) includes means to choose the queue to be served in correspondence of each allocation of bandwidth that activates its transmission, on the basis of defined priorities and totally autonomously.

7. Method of claim 1, **characterised by** the fact that bandwidth allocated in static modality is assigned with a fixed rate that is computed on the basis of ATM connection status, using a stored table that is cyclically scanned in the Master Station (MS).

8. Method of claim 1, **characterised by** the fact that bandwidth assignment mechanism for dynamic traffic is realised on more than one level, all equal and independent from each other, each dedicated to a specific.priority level to be used with different classes of traffic.

9. Method of claim 1, **characterised by** the fact that guaranteed dynamic bandwidth is assigned only to those Peripheral Stations (PSs) that have sent a Request indicating that their queues are not empty and with a rate requested by Peripheral Station (PS) itself within a maximum amount that is negotiated by the Master Station (MS) and the Peripheral Station (PS) during ATM connection setup phase.

10. Method of claim 1, **characterised by** the fact that available dynamic bandwidth is assigned cyclically and thus in equal parts to all the Peripheral Stations (PSs) that have indicated in a previous Request that their queues are not empty.

11. Method of claim 1, **characterised by** a retransmission mechanism applicable only to the traffic from Peripheral Stations (PSs) to the Master Station (MS) and realised through acknowledge messages that identify wrongly received cells and allocation of bandwidth for Retransmission sent to Peripheral Stations (PSs) that had sent incorrectly received cells.

12. Method of claim 11, **characterised by** the use of a reordering buffer in the Master Station (MS) to reinsert retransmitted cells in the correct order and a retransmission buffer in each Peripheral Station (PS) to store transmitted cells waiting for an eventual retransmission.

13. System to assign bandwidth in a point-to-multipoint ATM transmission system having a centralized or Master Station (MS) and a plurality of Peripheral Stations (PSs), the system comprising means of the Master Station (MS) to allocate a certain portion of total bandwidth in static modality to various Peripheral Station (PSs) on the basis of information about active connections but without considering the status of the queues in the various Peripheral Stations (PSs), **characterised by** means of the Master Station (MS) that allow distribution of bandwidth not assigned with the static technique according to a dynamic bandwidth allocation mode having two modalities, namely a guaranteed dynamical bandwidth modality and an available dynamic bandwidth modality,

    - according to the guaranteed dynamical bandwidth modality receiving bandwidth request messages sent by Peripheral Stations (PSs) including instantaneous bandwidth requirement information, and allocating bandwidth according to the received requests,
    - according to the available dynamic bandwidth modality assigning bandwidth which is not assigned by the previous techniques by sharing it in equal parts among Peripheral Stations (PSs) signalling to the Master Station (MS) the need to use the channel from Peripheral Stations (PSs) to the Master Station (MS) to send traffic.

14. System of claim 13, **characterised by** the fact that the Peripheral Stations (PSs) comprise means to generate a request message to be sent to the Master Station (MS) upon request by the Master Station (MS) itself and containing a binary information, in particular empty/not empty, or a multi-bit information, in particular level of fillment, identifying queue status in the Peripheral Station (PS) for those queues that are handled by dynamical allocation scheme; said Request containing, as well or instead, an information representing instantaneous rate of Grant generation for guaranteed dynamic bandwidth, rate that is limited by a maximum value that depends on active connections and is known both in the Master Station (MS) and in the Peripheral Station (PS).

15. System of claims 13 and 14, **characterised by** the fact that means to assign guaranteed dynamic bandwidth comprise:

    • counting means that is a block of downcounters, one for each Peripheral Station (PS) that is handled by the Master Station (MS), that are preset to a starting value when new connections are activated and are decremented at each time of a slot on the channel from Peripheral Station (PS) to Master Station (MS), being reset to starting value after having reached the 0 value;
    • decoding means that activate an output when a counter reaches the 0 value;
    • memory means to store queue status sent by the Peripheral Stations (PSs);
    • checking means that activate an output when decoding means associated to a particular Peripheral Station (PS) are activated and queue status of the same Peripheral Station (PS) is not empty and are able to generate a transmission grant to the Peripheral Station (PS) when the conditions are met.

16. System as of claim 15, **characterised by** the fact that the Master Station (MS) comprises means able to temporarily increment starting value of the downcounter of a particular Peripheral Station (PS) on the basis of precise indications received by the Peripheral Station (PS) itself as a Request.

17. System as of claim 15, **characterised by** the fact that said counting means, decoding means, memory means and checking means are in a number equal to traffic priorities that the system must be able to handle.

**Patentansprüche**

1. Verfahren zum Zuweisen von Bandbreite in einem Punkt-zu-Mehrpunkt-ATM-Übertragungssystem mit Zentral- oder Hauptstation (MS - Master Station) und mehreren Peripheriestationen (PS),
das folgende Schritte umfasst:

Zuordnen eines bestimmten Anteils der Gesamtbandbreite in statischer Modalität zu verschiedenen Peripheriestationen (PS) durch die Hauptstation (MS), und zwar auf der Grundlage von Informationen über aktive Verbindungen, ohne jedoch den Status der Warteschlangen in den verschiedenen Peripheriestationen (PS) zu berücksichtigen,

**gekennzeichnet durch** das Verteilen von nicht mit der statischen Technik zugeordneter Bandbreite **durch** die Hauptstation (MS) gemäß einem dynamischen Bandbreitenzuordnungsmodus mit zwei Modalitäten, und zwar einer Modalität für garantierte dynamische Bandbreite und einer Modalität für verfügbare dynamische Bandbreite,

- gemäß der Modalität für garantierte dynamische Bandbreite: Empfangen von von Peripheriestationen (PS) gesendeten Bandbreitenanforderungsmeldungen, die Informationen über den momentanen Bandbreitenbedarf enthalten, und Zuordnen von Bandbreite gemäß den empfangenen Anforderungen,
- gemäß der Modalität für verfügbare dynamische Bandbreite: Zuweisen von Bandbreite, die nicht **durch** die vorherigen Techniken zugewiesen wurde, **durch** deren gleichmäßiges Aufteilen zwischen Peripheriestationen (PS), die der Hauptstation (MS) signalisieren, dass sie den Kanal von den Peripheriestationen (PS) zu den Hauptstationen (MS) für das Senden von Verkehr benutzen müssen.

2. Verfahren nach Anspruch 1, **dadurch gekennzeichnet, dass** die von einer Peripheriestation (PS) gesendete Anforderung eine binäre Information (insbesondere leer/ nicht leer) oder eine Mehrbitinformation (insbesondere ein Füllniveau) enthält, die den Warteschlangenstatus in der Peripheriestation (PS) für diejenigen Warteschlangen angibt, die von dem Zuordnungsmodus für dynamische Bandbreite verarbeitet werden, wobei die Anforderung ebenfalls oder stattdessen eine Information enthält, die die momentane Rate der Erzeugung von Grants für garantierte dynamische Bandbreite darstellt - eine Rate, die von einem Maximalwert begrenzt wird, der von den aktiven Verbindungen abhängt und sowohl der Hauptstation (MS) als auch der Peripheriestation (PS) bekannt ist.

3. Verfahren nach Anspruch 2, bei dem eine solche momentane Rate auf der Grundlage der Empfangsrate von ATM-Zellen in der Peripheriestation (PS) geschätzt wird.

4. Verfahren nach Anspruch 2, bei dem eine solche momentane Rate auf der Grundlage des Warteschlangen-Füllniveaus der Peripheriestation (PS) geschätzt wird.

5. Verfahren nach Anspruch 1, bei dem die Zuordnung von Bandbreite die Übertragung von einer bestimmten Peripheriestation (PS) in einem bestimmten Zeitschlitz auf dem Kanal von den Peripheriestationen (PS) zur Hauptstation (MS) ermöglicht, so dass die Peripheriestation (PS) eine Nutzerverkehrszelle mit zugehöriger Anforderung oder nur eine Anforderung oder eine Betriebs- und Wartungszelle senden kann.

6. Verfahren nach Anspruch 5, bei dem die Bandbreitenzuordnungen die Peripheriestationen (PS) ohne Unterscheidung hinsichtlich der Art der Bandbreitenzuordnung, durch die sie in der Hauptstation (MS) generiert worden sind, ansprechen und die Peripheriestation (PS) Mittel umfasst, die die zu bedienende Warteschlage entsprechend jeder einzelnen Bandbreitenzuordnung, die ihre Übertragung aktiviert, wählen, und zwar auf der Grundlage definierter Prioritäten und völlig autonom.

7. Verfahren nach Anspruch 1, **dadurch gekennzeichnet, dass** in statischer Modalität zugeordnete Bandbreite mit einer festgelegten Rate zugewiesen wird, die auf der Grundlage des ATM-Verbindungsstatus mit Hilfe einer gespeicherten Tabelle berechnet wird, welche in der Hauptstation (MS) periodisch abgefragt wird.

8. Verfahren nach Anspruch 1, **dadurch gekennzeichnet, dass** der Bandbreiten-Zuweisungsmechanismus für dynamischen Verkehr auf mehr als einem Niveau realisiert wird, die alle gleich und voneinander unabhängig sind, wobei jede zu einem bestimmten Prioritätsniveau gehört, das bei verschiedenen Verkehrsklassen zu verwenden ist.

9. Verfahren nach Anspruch 1, **dadurch gekennzeichnet, dass** garantierte dynamische Bandbreite nur denjenigen Peripheriestationen (PS) zugewiesen wird, die eine Anforderung gesendet haben, die anzeigt, dass ihre Warteschlangen nicht leer sind, und mit einer Rate, die von der Peripheriestation (PS) selbst innerhalb eines Maximums angefordert wird, das von der Hauptstation (MS) und der Peripheriestation (PS) in der ATM-Verbindungsaufbauphase ausgehandelt wird.

10. Verfahren nach Anspruch 1, **dadurch gekennzeichnet, dass** verfügbare dynamische Bandbreite zyklisch und somit zu gleichen Teilen allen Peripheriestationen (PS) zugewiesen wird, die in einer vorausgegangenen Anforderung angegeben haben, dass ihre Warteschlangen nicht leer sind.

11. Verfahren nach Anspruch 1, **gekennzeichnet durch** einen Neuübertragungsmechanismus, der nur für den Verkehr von den Peripheriestationen (PS) zur Hauptstation (MS) angewendet und **durch** Bestätigungsmeldungen realisiert wird, die falsch empfangene Zellen und die Zuordnung von Bandbreite für die Neuübertragung angeben und an Peripheriestationen (PS) gesandt werden, die falsch empfangene Zellen gesendet hatten.

12. Verfahren nach Anspruch 11, **gekennzeichnet durch** die Verwendung eines Umordnungspuffers in der Hauptstation (MS) zum Wiedereinfügen erneut übertragener Zellen in der richtigen Reihenfolge und eines Neuübertragungspuffers in jeder Peripheriestation (PS) zum Speichern übertragener Zellen, die auf eine mögliche Neuübertragung warten.

13. System zum Zuweisen von Bandbreite in einem Punkt-zu-Mehrpunkt-ATM-Übertragungssystem mit Zentral- oder Hauptstation (MS - Master Station) und mehreren Peripheriestationen (PS), wobei das System Mittel der Hauptstation (MS) zum Zuordnen eines bestimmten Anteils der Gesamtbandbreite in statischer Modalität zu verschiedenen Peripheriestationen (PS) aufweist, was auf der Grundlage von Informationen über aktive Verbindungen erfolgt, ohne jedoch den Status der Warteschlangen in den verschiedenen Peripheriestationen (PS) zu berücksichtigen,
**gekennzeichnet durch** Mittel der Hauptstation (MS), die Folgendes ermöglichen: Verteilen von nicht mit der statischen Technik zugeordneter Bandbreite gemäß einem dynamischen Bandbreitenzuordnungsmodus mit zwei Modalitäten, und zwar einer Modalität für garantierte dynamische Bandbreite und einer Modalität für verfügbare dynamische Bandbreite,

- gemäß der Modalität für garantierte dynamische Bandbreite: Empfangen von von Peripheriestationen (PS) gesendeten Bandbreitenanforderungsmeldungen, die Informationen über den momentanen Bandbreitenbedarf enthalten, und Zuordnen von Bandbreite gemäß den empfangenen Anforderungen,
- gemäß der Modalität für verfügbare dynamische Bandbreite: Zuweisen von Bandbreite, die nicht **durch** die vorherigen Techniken zugewiesen wurde, **durch** deren gleichmäßiges Aufteilen zwischen Peripheriestationen (PS), die der Hauptstation (MS) signalisieren, dass sie den Kanal von Peripheriestationen (PS) zur Hauptstation (MS) für das Senden von Verkehr benutzen müssen.

14. System nach Anspruch 13, **dadurch gekennzeichnet, dass** die Peripheriestationen (PS) Mittel zum Erzeugen einer Anforderungsmeldung umfassen, die auf Anfrage der Hauptstation (MS) hin an diese gesendet werden soll und eine binäre Information (insbesondere leer/ nicht leer) oder eine Mehrbitinformation (insbesondere ein Füllniveau) enthält, die den Warteschlangenstatus in der Peripheriestation (PS) für diejenigen Warteschlangen angibt, die von dem dynamischen Zuordnungsschema verarbeitet werden, wobei die Anforderung ebenfalls oder stattdessen eine Information enthält, die die momentane Rate der Erzeugung von Grants für garantierte dynamische Bandbreite darstellt - eine Rate, die von einem Maximalwert begrenzt wird, der von den aktiven Verbindungen abhängt und sowohl der Hauptstation (MS) als auch der Peripheriestation (PS) bekannt ist.

15. System nach den Ansprüchen 13 und 14, **dadurch gekennzeichnet, dass** Mittel zum Zuweisen garantierter dynamischer Bandbreite Folgendes umfassen:

• Zählmittel, bei denen es sich um einen Block Abwärtszähler handelt (einen für jede Peripheriestation (PS), die von der Hauptstation (MS) verarbeitet wird), die auf einen Anfangswert voreingestellt werden, wenn neue Verbindungen aktiviert werden, und bei jedem Schlitz auf dem Kanal von der Peripheriestation (PS) zur Hauptstation (MS) abwärts zählen und auf den Anfangswert zurückgesetzt werden, wenn sie 0 erreicht haben.
• Decodiermittel, die einen Ausgang aktivieren, wenn ein Zähler den Wert 0 erreicht,
• Speichermittel zum Speichern des Warteschlangenstatus, der von den Peripheriestationen (PS) gesendet wird,
• Überprüfungsmittel, die einen Ausgang aktivieren, wenn zu einer bestimmten Peripheriestation (PS) gehörende Decodiermittel aktiviert werden und der Warteschlangenstatus derselben Peripheriestation (PS) nicht leer ist, und einen Übertragungs-Grant für die Peripheriestation (PS) erzeugen können, wenn die Bedingungen erfüllt werden.

16. System nach Anspruch 15, **dadurch gekennzeichnet, dass** die Hauptstation (MS) Mittel umfasst, die den Ausgangswert des Abwärtszählers einer bestimmten Peripheriestation (PS) auf der Grundlage genauer Angaben, die die Peripheriestation (PS) selbst als Anforderung empfangen hat, vorübergehend erhöhen können.

**17.** System nach Anspruch 15, **dadurch gekennzeichnet, dass** die Zählmittel, die Decodiermittel, die Speichermittel und die Überprüfungsmittel in einer Zahl vorhanden sind, die den Verkehrsprioritäten entspricht, welche das System verarbeiten können muss.

**Revendications**

**1.** Méthode d'allocation de bande passante dans un système de transmission ATM point à multipoint comprenant une station centralisée ou station maître (MS) et une pluralité de stations périphériques (PS1),
incluant les étapes
d'allocation par la station maître (MS) d'une certaine portion de la bande passante totale en modalité statique à diverses stations périphériques (PS1) sur la base d'informations concernant les connexions actives mais sans tenir compte de l'état des files d'attente dans les diverses stations périphériques (PS1),
**caractérisée par** la distribution par la station maître (MS) de la bande passante non allouée par la technique statique selon un mode d'allocation de bande passante dynamique comprenant deux modalités qui sont : une modalité de bande passante dynamique garantie et une modalité de bande passante dynamique disponible,

- selon la modalité de bande passante dynamique garantie, la réception de messages de demande de bande passante envoyés par des stations périphériques (PS1) incluant une information d'exigence de bande passante instantanée et l'allocation de bande passante en fonction des demandes reçues,
- selon la modalité de bande passante dynamique disponible, l'allocation de la bande passante qui n'est pas allouée par les techniques précédentes en la partageant en parts égales entre les stations périphériques (PS1) signalant à la station maître (MS) le besoin d'utiliser le canal des stations périphériques (PS1) vers les stations maîtres (MS) pour envoyer du trafic.

**2.** Méthode selon la revendication 1, **caractérisée en ce que** la demande envoyée par une station périphérique (PS) contient une information binaire, en particulier vide/non vide, ou une information multibit, en particulier un niveau de remplissage, identifiant l'état des files d'attente dans la station périphérique (PS) pour les files d'attente qui sont traitées par le mode d'allocation de bande passante dynamique ; ladite demande contenant, également ou à la place, une information représentant une vitesse instantanée de génération d'autorisations pour la bande passante dynamique garantie, vitesse qui est limitée par une valeur maximum qui dépend des connexions actives et est connue à la fois dans la station maître (MS) et dans la station périphérique (PS).

**3.** Méthode selon la revendication 2, dans laquelle cette vitesse instantanée est estimée sur la base du débit entrant de cellules ATM dans la station périphérique (PS).

**4.** Méthode selon la revendication 2, dans laquelle cette vitesse instantanée est estimée sur la base du niveau de remplissage des files d'attente de la station périphérique (PS).

**5.** Méthode selon la revendication 1, dans laquelle ladite allocation de bande passante permet une transmission d'une station périphérique (PS) particulière dans un intervalle de temps particulier sur le canal allant des stations périphériques (PS1) vers la station maître (MS), de manière à ce que la station périphérique (PS) puisse envoyer une cellule de trafic utilisateur avec une demande associée ou une demande seulement ou une cellule d'exploitation et de maintenance.

**6.** Méthode selon la revendication 5, dans laquelle ladite allocation de bande passante concerne les stations périphériques (PS1) sans aucune distinction liée au type d'allocation de bande passante avec lequel elles ont été générées dans la station maître (MS) et la station périphérique (PS) inclut un moyen pour choisir la file d'attente à servir en correspondance avec chaque allocation de bande passante qui active sa transmission, sur la base de priorités définies et d'une manière totalement autonome.

**7.** Méthode selon la revendication 1, **caractérisée en ce que** la bande passante allouée en modalité statique est allouée avec un débit fixe qui est calculé sur la base de l'état de la connexion ATM en utilisant une table mise en mémoire qui fait l'objet d'un balayage cyclique dans la station maître (MS).

**8.** Méthode selon la revendication 1, **caractérisée en ce que** le mécanisme d'allocation de bande passante pour le trafic dynamique est réalisé sur plus d'un niveau, tous égaux et indépendants les uns des autres, chacun étant dédié à un niveau de priorité spécifique prévu pour être utilisé avec différentes classes de trafic.

**9.** Méthode selon la revendication 1, **caractérisée en ce qu'**une bande passante dynamique garantie est allouée uniquement aux stations périphériques (PS1) qui ont envoyé une demande indiquant que leurs files d'attente ne sont pas vides et avec un débit demandé par la station périphérique (PS) elle-même dans les limites d'une quantité maximum qui est négociée par la station maître (MS) et la station périphérique (PS) pendant la phase d'établissement de la connexion ATM.

10. Méthode selon la revendication 1, **caractérisée en ce qu'**une bande passante dynamique disponible est allouée de manière cyclique et donc à parts égales à toutes les stations périphériques (PS1) qui ont indiqué dans une demande antérieure que leurs files d'attente ne sont pas vides.

11. Méthode selon la revendication 1, **caractérisée par** un mécanisme de retransmission applicable seulement au trafic des stations périphériques (PS1) vers la station maître (MS) et réalisé par le biais de messages d'accusé de réception qui identifient les cellules mal reçues et l'allocation de bande passante pour la retransmission envoyés à des stations périphériques (PS1) qui avaient envoyé des cellules incorrectement reçues.

12. Méthode selon la revendication 11, **caractérisée par** l'utilisation d'une mémoire tampon de réordonnancement dans la station maître (MS) pour réinsérer des cellules retransmises dans l'ordre correct et une mémoire tampon de retransmission dans chaque station périphérique (PS) pour stocker des cellules transmises attendant une éventuelle retransmission.

13. Système d'allocation de bande passante dans un système de transmission ATM point à multipoint comprenant une station centralisée ou station maître (MS) et une pluralité de stations périphériques (PS1), le système comprenant un moyen de la station maître (MS) pour allouer une certaine portion de la bande passante totale en modalité statique à diverses stations périphériques (PS1) sur la base d'informations concernant les connexions actives mais sans tenir compte de l'état des files d'attente dans les diverses stations périphériques (PS1), **caractérisé par** un moyen de la station maître (MS) qui permet la distribution de la bande passante non allouée par la technique statique selon un mode d'allocation de bande passante dynamique comprenant deux modalités qui sont : une modalité de bande passante dynamique garantie et une modalité de bande passante dynamique disponible,

- selon la modalité de bande passante dynamique garantie, la réception de messages de demande de bande passante envoyés par des stations périphériques (PS1) incluant une information d'exigence de bande passante instantanée et l'allocation de bande passante en fonction des demandes reçues,
- selon la modalité de bande passante dynamique disponible, l'allocation de la bande passante qui n'est pas allouée par les techniques précédentes en la partageant en parts égales entre les stations périphériques (PS1) signalant à la station maître (MS) le besoin d'utiliser le canal des stations périphériques (PS1) vers la station maître (MS) pour envoyer du trafic.

14. Système selon la revendication 13, **caractérisé en ce que** les stations périphériques (PS1) comprennent un moyen pour générer un message de demande destiné à être envoyé à la station maître (MS) sur demande de la station maître (MS) elle-même et contenant une information binaire, en particulier vide/non vide, ou une information multibit, en particulier niveau de remplissage, identifiant l'état des files d'attente dans la station périphérique (PS) pour les files d'attente qui sont traitées par la méthode d'allocation dynamique ; ladite demande contenant, également ou à la place, une information représentant une vitesse instantanée de génération d'autorisations pour la bande passante dynamique garantie, vitesse qui est limitée par une valeur maximum qui dépend des connexions actives et est connue à la fois dans la station maître (MS) et dans la station périphérique (PS).

15. Système selon les revendications 13 et 14, **caractérisé en ce que** les moyens pour allouer une bande passante dynamique garantie comprennent :

- un moyen de comptage qui est un bloc de décompteurs, un pour chaque station périphérique (PS) qui est traitée par la station maître (MS), qui sont préréglés sur une valeur de départ lorsque de nouvelles connexions sont activées et sont décrémentés à chaque instant d'un intervalle sur le canal de la station périphérique (PS) vers la station maître (MS), étant réinitialisés à la valeur de départ après avoir atteint la valeur 0 ;
- un moyen de décodage qui active une sortie lorsqu'un compteur atteint la valeur 0 ;
- un moyen de mémoire pour enregistrer l'état des files d'attente envoyé par les stations périphériques (PS1) ;
- un moyen de contrôle qui active une sortie lorsqu'un moyen de décodage associé à une station périphérique (PS) particulière est activé et que l'état des files d'attente de cette même station périphérique (PS) n'est pas vide et qui est capable de générer une autorisation de transmission pour la station périphérique (PS) lorsque les conditions sont remplies.

16. Système selon la revendication 15, **caractérisé en ce que** la station maître (MS) comprend un moyen capable d'incrémenter temporairement la valeur de départ du décompteur d'une station périphérique (PS) particulière sur la base d'indications précises reçues par la station périphérique (PS) elle-même en tant que demande.

**17.** Système selon la revendication 15, **caractérisé en ce que** lesdits moyen de comptage, moyen de décodage, moyen de mémoire et moyen de contrôle sont en nombre égal aux priorités de trafic que le système doit être capable de traiter.

Fig. 1

**Wrong slot notification**
From TC upstream slot elaboration: used to schedule retransmissions

**Request**
PSs' queue status and bandwidth requirements

**Timing/ Sequence numbering**

From TC

**MAC Master Processor**

Grant Generation
To be inserted in downstream slots

Output interface towards TC

Interface to micro-processor or equivalent functionality

Input Traffic Parameters (class, PCR, etc.) related to various PSs

# Fig. 2

EP 1 017 244 B1

Fig. 3

Input Grant

Request

Timing

Tx command

PS MAC Processor

Queue id to be served in current slot

Queue status

TC Sublayer

ATM Layer

**Fig. 4**

EP 1 017 244 B1

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IT 01286424

- WO 9735410 A